# EUROPÄISCHE PATENTSCHRIFT

(11) **EP 2 460 441 B1**
(45) Veröffentlichungstag und Bekanntmachung des Hinweises auf die Patenterteilung: **04.09.2013**
(21) Anmeldenummer: 11009429.9
(22) Anmeldetag: 29.11.2011
(51) Int. Cl.: A47C 27/06, A47C 23/00, F16F 1/02, A47C 23/04

(54) **Federelement**
Spring element
Elément de ressort

(30) Priorität: 06.12.2010 DE 202010016240 U
(43) Veröffentlichungstag der Anmeldung: 06.06.2012
(73) Patentinhaber: Diemer & Dr. Jaspert GbR, 85630 Grasbrunn (DE)
(72) Erfinder: Jaspert, Bodo, F., 85630 Grasbrunn (DE); Diemer, Gregor, 85456 Wartenberg (DE)
(74) Vertreter: Manitz, Finsterwald & Partner GbR

(56) Entgegenhaltungen:
- WO-A2-2010/099921
- DE-U1- 8 905 911
- DE-U1- 20 202 050
- FR-A1- 2 670 101
- FR-A1- 2 762 767

## Beschreibung

Die vorliegende Erfindung betrifft ein Federelement, insbesondere zur Verwendung in einer Federkernmatratze oder in einer Untermatratze, mit einer Basis, mehreren oberen Stützteilen und einem zwischen der Basis und den Stützteilen angeordneten Federkörper, wobei mindestens zwei nebeneinander liegende Stützteile mit einer Strebe miteinander verbunden sind und die Streben über mindestens einen Verbindungsabschnitt mit der Basis verbunden sind und die Verbindungsabschnitte im entlasteten Zustand des Federelements in Federrichtung betrachtet weiter unten liegen als die beiden miteinander verbundenen Stützteile, wobei alle Streben über je mindestens einen Verbindungsabschnitt mit der Basis verbunden sind.

Derartige Federelemente werden insbesondere für Untermatratzen anstelle von Federleisten oder in Verbindung mit Federleisten eingesetzt. Neben der dadurch erreichten punktuellen Auflösung ist die Stabilität der Federelemente besonders wichtig. Außerdem sollen die Herstellungskosten niedrig gehalten werden. Trotzdem ist eine ausreichende Dauerhaltbarkeit erforderlich.

Ein Federelement nach dem Oberbegriff des Anspruchs 1 ist aus der DE 89 05 911 U1 bekannt.

Der Erfindung liegt die Aufgabe zugrunde, ein derartiges Federelement zu verbessern.

Diese Aufgabe wird durch ein Federelement mit den Merkmalen des Anspruchs 1 gelöst.

Durch die erfindungsgemäße Ausgestaltung wird ein Federelement geschaffen, welches verhältnismäßig einfach aufgebaut und kostengünstig herstellbar ist. Zudem zeichnet es sich durch eine sehr hohe Stabilität, insbesondere gegen Verkippen aus.

Weitere vorteilhafte Ausgestaltungen der Erfindung sind in den Unteransprüchen enthalten und ergeben sich aus der nachfolgenden Beschreibung.

Durch Verbindung aller Stützteile über Streben mit ihren benachbarten Stützteilen und Verbinden aller Streben über je mindestens einen Verbindungsabschnitt der Basis ergibt sich ein symmetrischer, sehr kippstabiler Aufbau. Dabei ist es besonders bevorzugt, wenn die Verbindungsabschnitte jeweils in der Mitte zwischen den beiden Stützteilen angeordnet sind. Dadurch ergibt sich eine vorteilhafte Einfederung des Federelements, bei der sich insbesondere die Stützteile nicht oder nur wenig von der zentralen Federachse wegbewegen. Die Bewegung weg von der Federachse findet vielmehr ausschließlich bzw. hauptsächlich in den Streben und den Verbindungsabschnitten statt.

Als besonders vorteilhaft hat sich außerdem der erfindungsgemäße, insgesamt wellenförmige Verlauf der Streben um die zentrale Federachse herum herausgestellt. Vorteilhaft ist es außerdem, wenn die Streben gemeinsam den Federkörper oder zumindest einen Teil hiervon bilden. Der Aufbau des Federelements wird dadurch noch weiter vereinfacht.

Ein besonders einfach aufgebautes Federelement ergibt sich außerdem dann, wenn die Verbindungsabschnitte unmittelbar mit der Basis verbunden sind. Die Verbindungsabschnitte können aber auch über weitere Teile, insbesondere über weitere Streben, mit der Basis verbunden sein. Neben der Federhärte kann damit auch die Federhöhe in zusätzlichem Maße variiert werden. Beispielsweise sind über die Federhöhe zwei oder mehr wellenförmig um die zentrale Federachse herum verlaufende Streben vorgesehen, die über mehrere Verbindungsabschnitte miteinander bzw. mit der Basis verbunden sind.

Als bevorzugt hat es sich außerdem herausgestellt, wenn die Verbindungsabschnitte von einer Ebene zur nächsten zueinander versetzt angeordnet sind, insbesondere derart, dass die Verbindungsabschnitte einer Ebene jeweils etwa in der Mitte zwischen den Verbindungsabschnitten einer benachbarten Ebene bzw. zwischen zwei oberen Stützteilen liegen. Dadurch ergibt sich wiederum eine hohe Symmetrie mit entsprechend guten Federeigenschaften und hoher Kippstabilität.

Nach einer weiteren Ausgestaltung der Erfindung ist jeder Verbindungsabschnitt bevorzugt über je einen, insbesondere flachen, Ring mit der Basis oder einem weiteren Federkörperteil verbunden. Dadurch ergibt sich eine sehr feine Struktur mit geringem Materialaufwand.

Die Verbindungsabschnitte sind bevorzugt durch Streben gebildet oder umfassen Streben. Dies ist herstellungstechnisch vorteilhaft und führt zu vorteilhaften Federeigenschaften.

Besonders bevorzugt ist es außerdem, wenn die oberen Stützteile, die Streben und gegebenenfalls die weiteren Federkörperteile sowie bevorzugt auch die Basis in Federrichtung betrachtet einander nicht überlappen. Dadurch kann das Federelement zum einen durch einfaches Entformen hergestellt werden und zum anderen kann das Federelement bei Kompression sehr flach zusammengedrückt werden.

Nach einer weiteren Ausgestaltung der Erfindung weist das Federelement die Form eines nach oben offenen und sich nach oben erweiternden Korbes auf. Auch dies hat sich für die Federeigenschaften als vorteilhaft herausgestellt. Für die Herstellung vorteilhaft ist die Verwendung von Kunststoff, wobei insbesondere eine einstückige Herstellung bevorzugt ist.

Ein besonders vorteilhafter Aufbau ergibt sich beispielsweise, wenn vier Stützteile und mindestens vier Verbindungsabschnitte sowie gegebenenfalls vier Ringe zur Verbindung der Verbindungsabschnitte mit der Basis vorgesehen sind.

Ausführungsbeispiele der Erfindung sind in den Zeichnungen dargestellt und werden nachfolgend beschrieben. Es zeigen, jeweils in schematischer Ansicht,
- Fig. 1: eine perspektivische Ansicht eines ersten Ausführungsbeispiels der Erfindung,
- Fig. 2: eine Seitenansicht des Ausführungsbeispiels von Fig. 1,
- Fig. 3: eine Draufsicht auf die Oberseite des Ausführungsbeispiels von Fig. 1,
- Fig. 4: eine perspektivische Ansicht eines zweiten Ausführungsbeispiels der Erfindung,
- Fig. 5: eine Seitenansicht des Ausführungsbeispiels von Fig. 4,
- Fig. 6: eine Draufsicht auf die Oberseite des Ausführungsbeispiels von Fig. 4,
- Fig. 7: eine perspektivische Ansicht eines dritten Ausführungsbeispiels der Erfindung,
- Fig. 8: eine Seitenansicht des Ausführungsbeispiels von Fig. 7,
- Fig. 9: eine Draufsicht auf die Oberseite des Ausführungsbeispiels von Fig. 7,
- Fig. 10: eine perspektivische Ansicht eines vierten Ausführungsbeispiels,
- Fig. 11: eine Seitenansicht des Ausführungsbeispiels von Fig. 10, und
- Fig. 12: eine Draufsicht auf die Oberseite des Ausführungsbeispiels von Fig. 10.

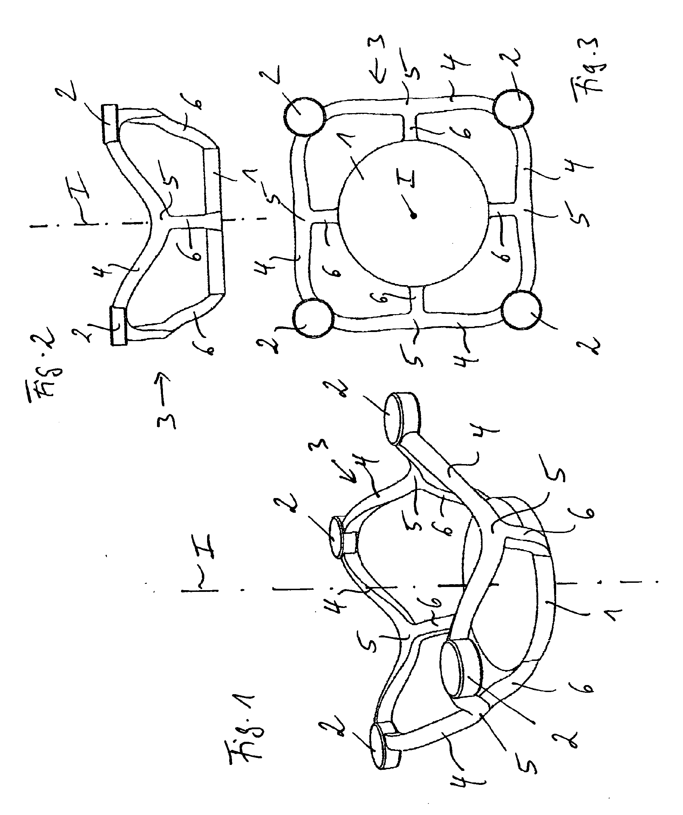

Das in den Fig. 1 bis 3 dargestellte Ausführungsbeispiel der Erfindung umfasst eine Basis 1, vier obere Stützteile 2 und einen zwischen Basis 1 und Stützteilen 2 angeordneten Federkörper 3. Jeweils zwei benachbarte obere Stützteile 2 sind durch eine Strebe 4 miteinander verbunden, wobei die Streben 4 gemeinsam einen wellenförmigen Verlauf um die zentrale Federachse I herum aufweisen. In ihrem mittleren Bereich weisen die Streben 4 jeweils einen Verbindungsabschnitt 5 auf, mit dem die Streben 4 mit der Basis 1 verbunden sind. Wie man sieht, ist die Verbindung mit der Basis 1 jeweils durch eine weitere Strebe 6 gebildet, die einerseits an der Basis 1 und andererseits am Verbindungsabschnitt 5 der jeweiligen Strebe 4 eingesetzt ist, wobei die Verbindungsabschnitte 5 bei unbelasteter Feder weiter unten liegen als die oberen Stützteile 2, also näher an der Basis 1.

Wie man sieht, weist das dargestellte Gitterelement einen sehr einfachen Aufbau auf. In der in Fig. 3 gezeigten Draufsicht sind die vier oberen Stützteile 2 gleichmäßig um die zentrale Federachse I angeordnet. Die Streben 4 verlaufen jeweils im Wesentlichen gerade zwischen zwei benachbarten oberen Stützteilen 2, und die Streben 6 verlaufen ebenfalls im Wesentlichen gerade zwischen den Verbindungsabschnitten 5 in der Mitte der Streben 4 zu der Basis 1 hin.

Bei einer Kompression des dargestellten Federelements in Richtung der zentralen Federachse I bewegen sich die oberen Stützteile nach unten, wobei sie sich im Wesentlichen nicht oder nur sehr wenig von der zentralen Federachse I entfernen. Die Verformung findet vielmehr im Wesentlichen in den Streben 4 und 6 statt, indem sich die Streben 6 radial nach außen, also weg von der zentralen Federachse I bewegen, so dass sich die Verbindungsabschnitte 5 ebenfalls von der zentralen Federachse I wegbewegen. Da die Abstützung beispielsweise einer Matratze über die oberen Stützteile 2 erfolgt, hat die beim Einfedern des Federelements auftretende Verformung praktisch keine negative Auswirkung auf das abgestützte Teil. Die oberen Stützteile 2 können dabei in der dargestellten Weise verwendet werden oder zusammen mit einer oder mehreren Deckplatten. Es kann also eine gemeinsame Deckplatte vorgesehen sein, die das gesamte Federelement überdeckt und mit allen vier oberen Stützteilen 2 verbunden ist, oder es können zwei, drei oder vier Deckplatten vorgesehen sein, die dementsprechend mit jeweils einem, zwei, oder drei oberen Stützteilen 2 verbunden sind. Bei Verwendung von mehreren Deckplatten erhöht sich die Auflösung des Federelements, da die oberen Stützteile 2 auch einzeln einfedern können.

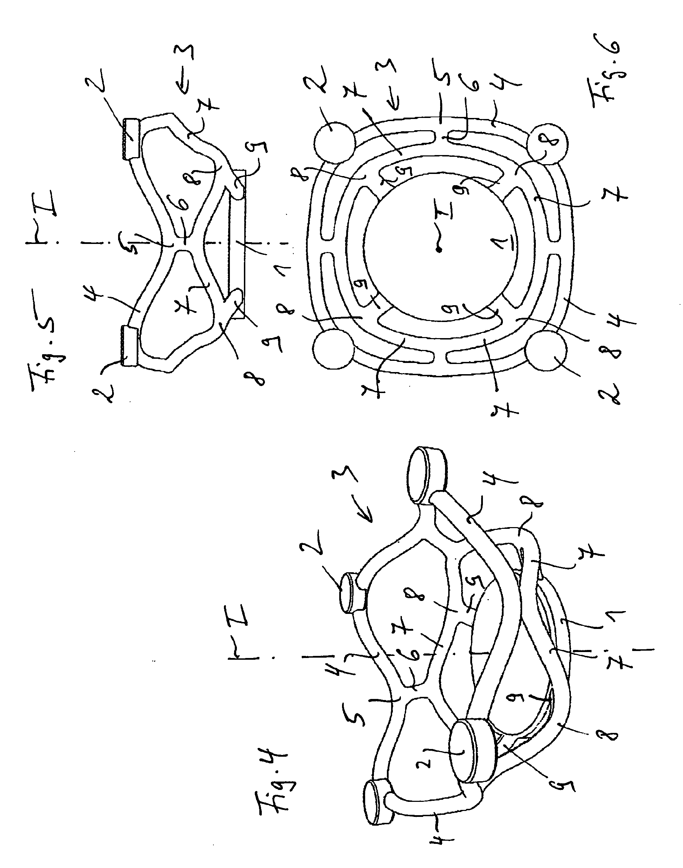

Das Ausführungsbeispiel der Fig. 4 und 6 unterscheidet sich vom ersten Ausführungsbeispiel im Wesentlichen dadurch, dass hier die Verbindungsabschnitte 5 über die Streben 6 nicht direkt mit der Basis 1 verbunden sind sondern mit weiteren Streben 7, die jeweils zwei benachbarte Streben 6 miteinander verbinden. Diese weiteren Streben 7 weisen ihrerseits in ihrem mittleren Bereich einen Verbindungsabschnitt 8 auf, der über eine weitere Strebe 9 mit der Basis 1 verbunden ist. Dadurch sind die Verbindungsabschnitte 5 und 8 und ebenso die Streben 6, 9 gleichmäßig um die Federachse I zueinander versetzt angeordnet. Die weiteren Streben 7 bilden außerdem ebenfalls wie die Streben 4 um die Federachse I herum eine Wellenform, wobei die Wellenberge bei den Streben 6 liegen und die Täler bei den Streben 9. Auch bei dieser Variante erfolgt die Bewegung des Federelements im Wesentlichen in den Streben 4, 6, 7 und 9, während die oberen Stützteile 2 im Wesentlichen ohne Entfernung von der zentralen Federachse I einfedern.

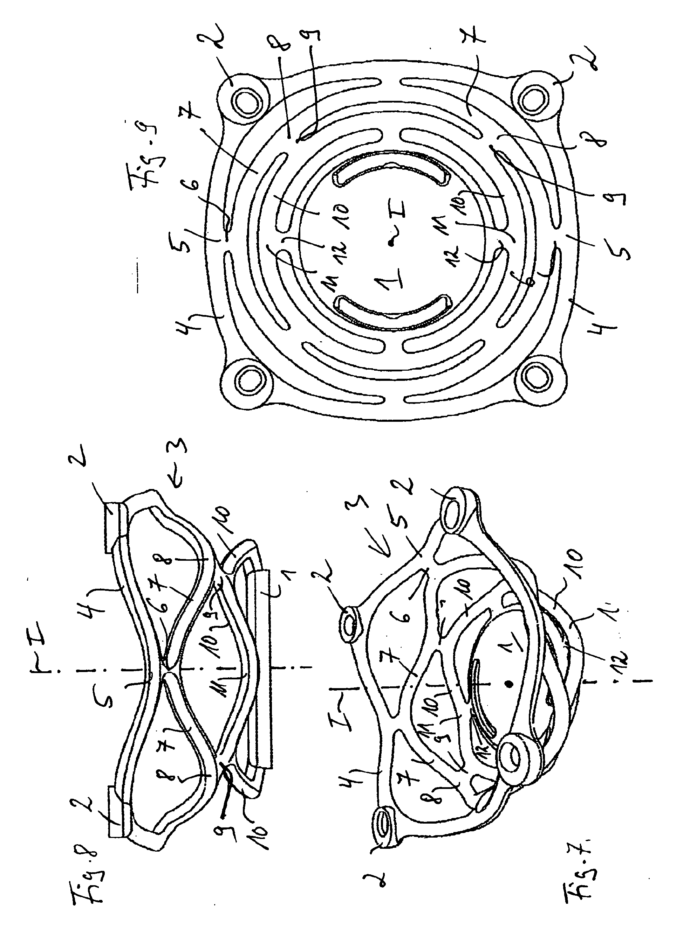

Bei dem dritten Ausführungsbeispiel der Fig. 7 bis 9 sind zusätzlich zu den weiteren Streben 7 und 9 des zweiten Ausführungsbeispiels noch weitere Streben 10 vorgesehen, die ihrerseits Verbindungsabschnitte 11 aufweisen, mit denen die Streben 10 über weitere Streben 12 mit der Basis 1 verbunden sind. Die Verbindungsabschnitte 11 und die Streben 12 sind jedoch gegenüber den Verbindungsabschnitte 8 und Streben 9 versetzt angeordnet, so dass sie sich im Wesentlichen an derselben Position befinden wie die Verbindungsabschnitte 5 bzw. Streben 6. Auch die Streben 10 verlaufen wellenförmig um die zentrale Federachse I herum. Das Verhalten dieses Federelements ist entsprechend dem Verhalten des ersten und zweiten Ausführungsbeispiels.

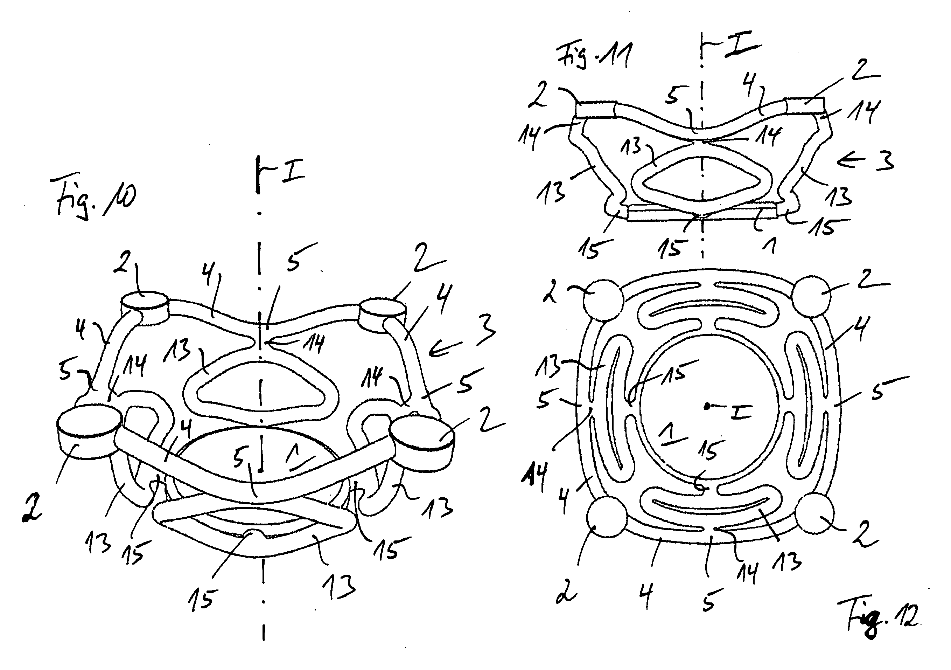

Das in den Fig. 10 bis 12 dargestellte vierte Ausführungsbeispiel unterscheidet sich vom ersten Ausführungsbeispiel der Fig. 1 bis 3 im Wesentlichen dadurch, dass anstelle der Streben 6 zwischen den Verbindungsabschnitten 5 und der Basis 1 jeweils ein flacher Ring 13 vorgesehen ist, dessen eine Flachseite über eine kurze Strebe 14 mit dem Verbindungsabschnitt 5 einer zugeordneten Strebe 4 verbunden ist, während eine andere Flachseite über eine kurze Strebe 15 mit der Basis 1 verbunden ist. Untereinander sind die flachen Ringe 13 nicht verbunden. Auch hier erfolgt beim Einfedern im Wesentlichen keine Entfernung der oberen Stützteile 2 von der zentralen Federachse I. Die Bewegung findet im Wesentlichen in den Streben 4 und den flachen Ringen 13 statt.

### Bezugszeichenliste

- 1: Basis
- 2: oberes Stützteil
- 3: Federkörper
- 4: Strebe
- 5: Verbindungsabschnitt
- 6: Strebe
- 7: Strebe
- 8: Verbindungsabschnitt
- 9: Strebe
- 10: Strebe
- 11: Verbindungsabschnitt
- 12: Strebe
- 13: flacher Ring
- 14: Strebe
- 15: Strebe
- I: zentrale Federachse

## Patentansprüche

1. Federelement, insbesondere zur Verwendung in einer Federkernmatratze oder in einer Untermatratze, mit einer Basis (1), mehreren oberen Stützteilen (2) und einem zwischen der Basis (1) und den Stützteilen (2) angeordneten Federkörper (3), wobei mindestens zwei nebeneinander liegende Stützteile (2) mit einer Strebe (4) miteinander verbunden sind, die Streben (4) jeweils über mindestens einen Verbindungsabschnitt (5) mit der Basis (1) verbunden sind und die Verbindungsabschnitte (5) im entlasteten Zustand des Federelements in Federrichtung (I) betrachtet weiter unten liegen als die beiden miteinander verbundenen Stützteile (2), und
wobei alle Streben (4) über je mindestens einen Verbindungsabschnitt (5) mit der Basis (1) verbunden sind,
**dadurch gekennzeichnet, dass**
alle Stützteile (2) über Streben (4) mit ihren beiden benachbarten Stützteilen (2) verbunden sind und dass die Streben (4) zusammen einen wellenförmigen Verlauf um die zentrale Federachse (I) herum aufweisen.

2. Federelement nach Anspruch 1,
**dadurch gekennzeichnet, dass**
die Verbindungsabschnitte (5) jeweils in der Mitte zwischen den beiden Stützteilen (2) angeordnet sind.

3. Federelement nach einem der vorhergehenden Ansprüche,
**dadurch gekennzeichnet, dass**
die Streben (4) gemeinsam den Federkörper (3) oder einen Teil des Federkörpers (3) bilden.

4. Federelement nach einem der vorhergehenden Ansprüche,
**dadurch gekennzeichnet, dass**
die die Verbindungsabschnitte (5) unmittelbar mit der Basis (1) verbunden sind.

5. Federelement nach einem der vorhergehenden Ansprüche,
**dadurch gekennzeichnet, dass**
die Verbindungsabschnitte (5) über weitere Federkörperteile (6 bis 15), insbesondere weitere Streben, mit der Basis (1) verbunden sind.

6. Federelement nach Anspruch 5,
**dadurch gekennzeichnet, dass**
über die Federhöhe zwei oder mehr wellenförmig um die zentrale Federachse (I) herum verlaufende Anordnungen von Streben (4, 7, 10) vorgesehen sind, die über mehrere Verbindungsabschnitte (5, 8, 11) miteinander bzw. mit der Basis (1) verbunden sind.

7. Federelement nach Anspruch 6,
**dadurch gekennzeichnet, dass**
die Verbindungsabschnitte (5, 8, 11) von einer Ebene zur nächsten zueinander versetzt angeordnet sind, insbesondere derart, dass die Verbindungsabschnitte (5) einer Ebene jeweils etwa in der Mitte zwischen den Verbindungsabschnitten (8) einer benachbarten Ebene bzw. zwischen zwei Stützteilen (2) liegen.

8. Federelement nach Anspruch 5,
**dadurch gekennzeichnet, dass**
jeder Verbindungsabschnitt (5) über je einen, insbesondere flachen, Ring (13) mit der Basis (1) oder einem weiteren Federkörperteil verbunden ist.

9. Federelement nach einem der vorhergehenden Ansprüche,
**dadurch gekennzeichnet, dass**
vier obere Stützteile (2) vorgesehen sind.

10. Federelement nach einem der vorhergehenden Ansprüche,
**dadurch gekennzeichnet, dass**
die Verbindungsabschnitte (5, 8, 11) durch Streben gebildet sind oder Streben umfassen.

11. Federelement nach einem der vorhergehenden Ansprüche,
**dadurch gekennzeichnet, dass**
die oberen Stützteile (2), die Streben (4, 7, 10) und gegebenenfalls die weiteren Federkörperteile sowie bevorzugt die Basis (1) in Federrichtung (I) betrachtet einander nicht überlappen.

12. Federelement nach einem der vorhergehenden Ansprüche,
**dadurch gekennzeichnet, dass**
das Federelement die Form eines nach oben offenen und sich nach oben erweiternden Korbes aufweist.

13. Federelement nach einem der vorhergehenden Ansprüche,
**dadurch gekennzeichnet, dass**
das Federelement aus Kunststoff besteht, insbesondere einstückig aus Kunststoff gefertigt ist.

## Claims

1. A spring element, in particular for use in an innerspring mattress or in an undermattress, having a base (1), having a plurality of upper support parts (2) and having a spring body (3) arranged between the base (1) and the support parts (2), wherein at least two support parts (2), which lie next to one another, are connected to one another by a strut (4), wherein the struts (4) are each connected to the base (1) via at least one connection section (5) and wherein the connection sections (5) lie further below in the non-loaded state of the spring element, viewed in the spring direction (I), than the two mutually connected support parts (2), and
wherein all the struts (4) are connected to the base (1) via a respective at least one connection section (5),
**characterised in that**
all the support parts (2) are connected to their two adjacent support parts (2) via struts (4); and **in that** the struts (4) together have a wavy extent around the central spring axis (I).

2. A spring element in accordance with claim 1,
**characterised in that**
the connection sections (5) are each arranged at the centre between the two support parts (2).

3. A spring element in accordance with one of the preceding claims,
**characterised in that**
the struts (4) together form the spring body (3) or a part of the spring body (3).

4. A spring element in accordance with any one of the preceding claims,
**characterised in that**
the connection sections (5) are directly connected to the base (1).

5. A spring element in accordance with any one of the preceding claims,
**characterised in that**
the connection sections (5) are connected to the base (1) via further spring body parts (6 to 15), in particular further struts.

6. A spring element in accordance with claim 5,
**characterised in that**
two or more arrangements of struts (4, 7, 10) are provided above the spring height which run around in the central spring axis (I) in wavy form and which are connected to one another or to the base (1) via a plurality of connection sections (5, 8, 11).

7. A spring element in accordance with claim 6,
**characterised in that**
the connection sections (5, 8, 11) are arranged offset from one another from one plane to the next, in particular such that the connection sections (5) of one plane in each case lie approximately in the centre between the connection sections (8) of an adjacent plane or between two support parts (2).

8. A spring element in accordance with claim 5,
**characterised in that**
each connection section (5) is connected to the base (1) or to a further spring body via a respective one ring (13), which is in particular flat.

9. A spring element in accordance with any one of the preceding claims,
**characterised in that**
four upper support parts (2) are provided.

10. A spring element in accordance with any one of the preceding claims,
**characterised in that**
the connection sections (5, 8, 11) are formed by struts or comprise struts.

11. A spring element in accordance with any one of the preceding claims,
**characterised in that**
the upper support parts (2), the struts (4, 7, 10) and, optionally, the further spring body parts as well as preferably the base (1) do not overlap one another viewed in the spring direction (I).

12. A spring element in accordance with any one of the preceding claims,
**characterised in that**
the spring element has the form of an upwardly open and upwardly expanding basket.

13. A spring element in accordance with any one of the preceding claims,
**characterised in that**
the spring element is composed of plastic, is in particular produced from plastic in one piece.

## Revendications

1. Élément de ressort, en particulier pour l'utilisation dans un matelas à ressort ou dans un sommier, comprenant une base (1), plusieurs pièces de soutien supérieures (2) et un corps de ressort (3) agencé entre la base (1) et les pièces de soutien (2), dans lequel au moins deux pièces de soutien (2) situées l'une à côté de l'autre sont reliées l'une à l'autre avec une entretoise (4), les entretoises (4) sont reliées chacune avec la base (1) via au moins un tronçon de liaison (5) et, dans l'état détendu de l'élément de ressort, les tronçons de liaison sont disposés, observés en direction du ressort (I), plus loin vers le bas que les deux pièces de soutien (2) reliées l'une à l'autre, et
dans lequel toutes les entretoises (4) sont reliées chacune avec la base (1) via au moins un tronçon de liaison (5),
**caractérisé en ce que**
toutes les pièces de soutien (2) sont reliées avec leurs deux pièces de soutien voisines (2) via des entretoises (4), et **en ce que** les entretoises (4) présentent conjointement un tracé de forme ondulée tout autour de l'axe de ressort central (I).

2. Élément de ressort selon la revendication 1,
**caractérisé en ce que** les tronçons de liaison (5) sont agencés respectivement au milieu entre les deux pièces de soutien (2).

3. Élément de ressort selon l'une des revendications précédentes,
**caractérisé en ce que** les entretoises (4) forment conjointement le corps de ressort (3) ou une partie du corps de ressort (3).

4. Élément de ressort selon l'une des revendications précédentes,
**caractérisé en ce que** les tronçons de liaison (5) sont reliés directement avec la base (1).

5. Élément de ressort selon l'une des revendications précédentes,
**caractérisé en ce que** les tronçons de liaison (5) sont reliées avec la base (1) via d'autres parties (6 à 15) formant corps de ressort, en particulier d'autres entretoises.

6. Élément de ressort selon la revendication 5,
**caractérisé en ce qu'**il est prévu sur la hauteur du ressort deux ou plusieurs agencements d'entretoises (4, 7, 10) en forme ondulée qui s'étendent tout autour de l'axe de ressort central (I), qui sont reliés les uns aux autres ou avec la base (1) via plusieurs tronçons de liaison (5, 8, 11).

7. Élément de ressort selon la revendication 6,
**caractérisé en ce que** les tronçons de liaison (5, 8, 11) sont agencés en décalage les uns par rapport aux autres d'un plan au suivant, en particulier de telle façon que les tronçons de liaison (5) d'un plan sont disposés respectivement approximativement au milieu entre les tronçons de liaison (8) d'un plan voisin ou respectivement entre deux pièces de soutien (2).

8. Élément de ressort selon la revendication 5, **caractérisé en ce que** chaque tronçon de liaison (5) est relié avec la base (1) ou avec une autre partie formant corps de ressort, respectivement via une bague (13), en particulier plate.

9. Élément de ressort selon l'une des revendications précédentes,
**caractérisé en ce qu'**il est prévu quatre pièces de soutien supérieures (2).

10. Élément de ressort selon l'une des revendications précédentes,
**caractérisé en ce que** les tronçons de liaison (5, 8, 11) sont formés par des entretoises ou comprennent des entretoises.

11. Élément de ressort selon l'une des revendications précédentes,
**caractérisé en ce que** les pièces de soutien supérieures (2), les entretoises (4, 7, 10) et le cas échéant les autres parties formant corps de ressort, et de préférence la base (1), ne se chevauchent pas les unes les autres, observées dans la direction du ressort (X)

12. Élément de ressort selon l'une des revendications précédentes,
**caractérisé en ce que** l'élément de ressort présente la forme d'une corbeille ouverte vers le haut et s'élargissant vers le haut.

13. Élément de ressort selon l'une des revendications précédentes,
**caractérisé en ce que** l'élément de ressort est en matière plastique, en particulier fabriqué d'une seule pièce en matière plastique.
